# EUROPEAN PATENT SPECIFICATION

(11) **EP 2 302 197 B1**
(45) Date of publication and mention of the grant of the patent: **10.02.2016**
(21) Application number: 09794285.8
(22) Date of filing: 11.06.2009
(51) Int. Cl.: F02M 61/18, F02M 61/04, F02M 61/08, F02M 63/00, F02B 23/10, F02B 17/00

(54) **FUEL INJECTION VALVE AND FUEL INJECTION DEVICE**
BRENNSTOFFEINSPRITZVENTIL UND BRENNSTOFFEINSPRITZVORRICHTUNG
SOUPAPE D'INJECTION DE CARBURANT ET DISPOSITIF D'INJECTION DE CARBURANT

(30) Priority: 11.07.2008 JP 2008181689
(43) Date of publication of application: 30.03.2011
(73) Proprietor: Hitachi Automotive Systems, Ltd., Hitachinaka-shi Ibaraki 312-8503 (JP)
(72) Inventor: YASUKAWA, Yoshihito, Hitachinaka-shi Ibaraki 312-0034 (JP); ABE, Motoyuki, Hitachinaka-shi Ibaraki 312-8503 (JP); EHARA, Hideharu, Hitachinaka-shi Ibaraki 312-8503 (JP); ISHIKAWA, Tohru, Hitachinaka-shi Ibaraki 312-8503 (JP); KOWATARI, Takehiko, Hitachinaka-shi Ibaraki 312-0034 (JP)
(74) Representative: MERH-IP Matias Erny Reichl Hoffmann Patentanwälte PartG mbB
(86) International application number: PCT/JP2009/061061
(87) International publication number: WO 2010/004838

(56) References cited:
- DE-A1-102005 044 675
- JP-A- 11 280 605
- JP-A- 2002 130 086
- JP-A- 2006 177 174
- JP-A- 2006 214 292
- JP-T- 2000 516 319
- US-A- 6 155 499

## Description

### Technical Field

The present invention relates generally to fuel injectors and fuel injection devices for supplying internal combustion engines with fuel and, more particularly, to a fuel injector and a fuel injection device capable of varying the shape of fuel spray.

### Background Art

Restrictions on fuel consumption of automobiles have been more and more stringent these years and internal combustion engines for automobiles are required to achieve lower fuel consumption.- The internal combustion engines are also required to offer higher power output. The direct injection (DI) engine that directly injects fuel into its combustion chamber is proposed as means of achieving both lower fuel consumption and higher power output.

The DI engine can cool its combustion chamber by using the latent heat of vaporization of injected fuel. In gasoline engines, knocking occurs in which the fuel-air mixture auto-ignites earlier than propagation of a flame after ignition. This necessitates a typical approach to engineer the engine so as to have a low compression ratio. In the DI engine, the abovementioned effect inhibits the knocking, which enables engineering of the engine with a higher compression ratio for greater fuel efficiency. In the DI system, stratified combustion can reduce fuel consumption even further. Stratified combustion refers to a method of combustion that achieves so-called lean burning by reducing the amount of fuel supplied compared with the stoichiometric ratio of the cylinder. By conducting lean burning, a greater amount of air is drawn in even under light load conditions to thereby reduce a negative pressure that is generated on an intake stroke. The amount of work done by the engine counter thereto (pumping loss) is thereby reduced and fuel efficiency can be improved.

Meanwhile, homogeneous combustion must be conducted to achieve a high power output. The homogeneous combustion refers to a method of combustion that supplies fuel in such a manner that the fuel-air ratio is the stoichiometric ratio and mixes the air and fuel homogeneously and ignites the mixture in the combustion chamber. To conduct the homogeneous combustion, a large amount of air must be drawn in and mixed sufficiently with an even larger amount of fuel.

It is therefore desirable that different types of sprays be requested and a spray shape be made variable.

As a fuel injector for achieving this end, a known arrangement is, in an outswinging fuel injector, to change fuel paths using a stroke, thereby varying the spray shape (see, for example, Patent Document 1).

### Prior Art Document

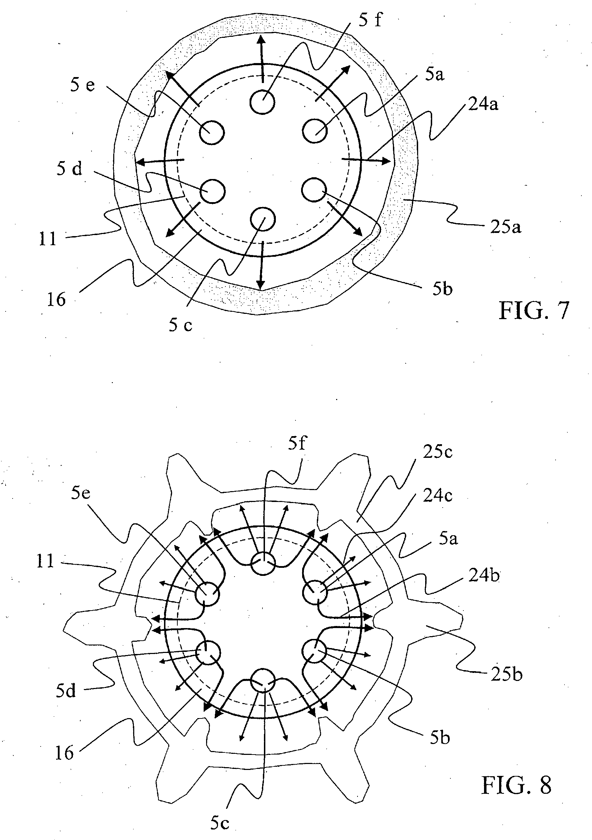

In DE 10 2005 044 675 A1, a fuel injection valve, especially for fuel injection systems of internal combustion engines, has injection orifices orientated in the valve body or in the valve needle so that the fuel is injected directly or only slightly wetting the valve body by means of an annular gap which opens between the shutoff component and valve seat face when the fuel injection valve opens.
Further US 2007/0120087 A1 shows another fuel injection valve similar to the one above, in particular in the embodiment show in figure 7.

### Patent Document

Patent Document 1: JP-2002-130086-A

### Summary of the Invention

### (Problems to be Solved by the Invention)

An outswinging fuel injector is known as a type of fuel injector for conducting center injection. The outswinging fuel injector has a valve element that protrudes from a leading end of a nozzle, thus letting fuel flow through a gap between a seat and the valve element, so that the fuel is injected from the gap. The type is characterized by its good atomization performance thanks to the fuel being injected from the narrow gap.

To conduct both the stratified combustion and the homogeneous combustion in an center injection system that is required for achieving both low fuel consumption and high power output, the fuel injector is required to be capable of varying the spray shape to thereby respond to various types of sprays requested. The various types of sprays requested include, for example, a spray that has a low flow rate and is stagnant in areas around a plug, requested during the stratified combustion, and a spray that has a high flow rate and is highly dispersive in cylinders, requested during the homogeneous combustion.

Patent Document 1 discloses an arrangement, in which the stroke of a valve element is changed to change fuel paths themselves, thereby varying the spray shape. The structure to change the fuel paths through vertical motion of the valve element, however, entails actual manufacturing difficulties. For example, adopting the method of changing the fuel paths as in the structure disclosed in Patent Document 1, wherein the fuel paths are changed according to a vertical position of the valve element, requires a valve element stroke of hundreds of micrometers or several millimeters. This poses problems in that sufficient response is not obtained and it is difficult to set a practical fluid path cross-sectional area. Practically speaking, the valve element stroke is about tens of micrometers and that of hundreds of micrometers or several millimeters described above is impractical.

An object of the present invention is to provide a fuel injector and a fuel injection device that, in order to achieve both low fuel consumption and high power output, can vary the spray shape in an outswinging fuel injector so as to form a spray suitable for each of stratified combustion and homogeneous combustion.

### (Means for Solving the Problems)

(1) The above-discussed object is solved by the invention according to claims 1 and 5. The dependent claims describe further preferred developments. It is provided an outswinging fuel injector that includes a nozzle having a plurality of fuel paths thereinside and a valve element vertically movable inside the nozzle, and having a conical valve element surface facing a conical valve seat surface of the nozzle, the valve element surface abutting against the valve seat surface to form a seat portion that seals fuel, the fuel paths each having an opening portion upstream of the seat portion, and the valve element moving to form an annular gap between the seat portion and the valve element surface of the valve element to thereby inject fuel from the annular gap portion. A distance between the seat portion and the valve element when the valve element leaves the valve seat surface is variable.
   These arrangements allow, in the outswinging fuel injector, the spray shape to be variable, so that the spray suitable for each of stratified combustion and homogeneous combustion can be formed.
(2) In (1) above, preferably, the plurality of fuel paths from outlet portions thereof toward the seat portion each include a zone that has either a decreasing cross-sectional area or an identical cross-sectional area toward a downstream side.
(3) In (1) above, preferably, the fuel paths are arrayed circumferentially around the valve element, and equally spaced apart from each other.
(4) In (1) above, preferably, the fuel paths are arrayed eccentrically on a circumferential local part around the valve element.
(5) To achieve the foregoing object, another aspect provides a fuel injection device including a fuel injector that directly injects fuel into a combustion chamber of an internal combustion engine; and control means that controls the amount of fuel injected by the fuel injector. The fuel injector that is an outswinging fuel type includes: a nozzle having a plurality of fuel paths thereinside; and a valve element vertically movable inside the nozzle, and having a conical valve element surface facing a conical valve seat surface of the nozzle, the valve element surface abutting against the valve seat surface to form a seat portion that seals fuel, the fuel paths each having an opening portion upstream of the seat portion, the valve element moving to form an annular gap between the seat portion and the valve element surface of the valve element to thereby inject fuel from the annular gap portion. A distance between the seat portion and the valve element when the valve element leaves the valve seat surface is variable.

These arrangements allow, in the outswinging fuel injector, the spray shape to be variable, so that the spray suitable for each of stratified combustion and homogeneous combustion can be formed.

### (Effect of the Invention)

According to the aspects of the present invention, in the outswinging fuel injector, the spray shape can be varied and low fuel consumption and high power output can both be achieved.

### Brief Description of the Drawings

Fig. 1 is a system block diagram showing an arrangement of a fuel injection device that uses a fuel injector according to a first embodiment of the present invention.
Fig. 2 is an enlarged cross-sectional view showing an arrangement of a nozzle leading end portion of the fuel injector according to the first embodiment of the present invention.
Fig. 3 is a cross-sectional view taken along line A-A of Fig. 2.
Fig. 4 is a downward perspective view showing the nozzle leading end portion of the fuel injector according to the first embodiment of the present invention.
Fig. 5 is an enlarged cross-sectional view showing the nozzle leading end portion of the fuel injector according to the first embodiment of the present invention.
Fig. 6 is an explanatory view illustrating a relation between a valve element stroke and a cross-sectional area of a fuel flow path in the fuel injector according to the first embodiment of the present invention.
Fig. 7 is an explanatory view illustrating a fuel spray shape in the fuel injector according to the first embodiment of the present invention.
Fig. 8 is an explanatory view illustrating the fuel spray shape in the fuel injector according to the first embodiment of the present invention.
Fig. 9 is a cross-sectional view showing an internal combustion engine mounted with the fuel injector according to the first embodiment of the present invention.
Fig. 10 is a cross-sectional view showing the internal combustion engine mounted with the fuel injector according to the first embodiment of the present invention.
Fig. 11 is an explanatory chart illustrating operating conditions of the internal combustion engine and driving conditions of the fuel injector in the fuel injector according to the first embodiment of the present invention.
Fig. 12 is an enlarged cross-sectional view showing another arrangement of the nozzle leading end portion of the fuel injector according to an example useful to understand the invention.
Fig. 13 is an enlarged view showing part C of Fig. 12.
Fig. 14 is an enlarged cross-sectional view showing an arrangement of a nozzle leading end portion of a fuel injector according to a second embodiment of the present invention.
Fig. 15 is an explanatory view illustrating a fuel spray shape in the fuel injector according to the second embodiment of the present invention.
Fig. 16 is an explanatory view illustrating the fuel spray shape in the fuel injector according to the second embodiment of the present invention.
Fig. 17 is a cross-sectional view showing an internal combustion engine mounted with a fuel injector according to a third embodiment of the present invention.
Fig. 18 is an explanatory view illustrating a fuel spray shape in the fuel injector according to the third embodiment of the present invention.
Fig. 19 is a cross-sectional view showing the internal combustion engine mounted with the fuel injector according to the third embodiment of the present invention.
Fig. 20 is an explanatory chart illustrating operating conditions of the internal combustion engine and driving conditions of the fuel injector in the fuel injector according to the third embodiment of the present invention.

### Best Mode for Carrying Out the Invention

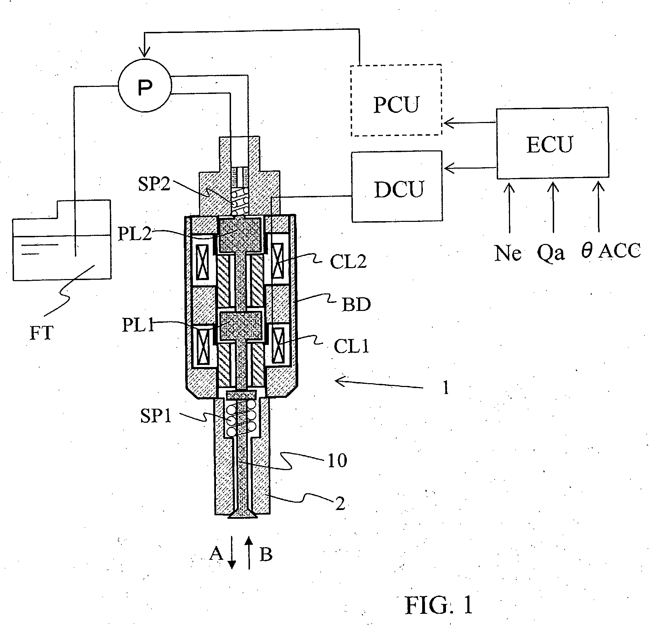

An arrangement and operation of a fuel injector according to a first embodiment of the present invention will be described below with reference to Figs. 1 through 13.

The arrangement of a fuel injection device that uses the fuel injector according to the embodiment will be first described with reference to Fig. 1.

Fig. 1 is a system block diagram showing the arrangement of the fuel injection device that uses the fuel injector according to the first embodiment of the present invention.

A fuel injector 1 is an outswinging fuel injector, in which a valve element protrudes from a leading end of a nozzle to thereby let fuel flow through a gap between a seat and the valve element. The valve element of the fuel injector 1 has a variable stroke. In the description that follows, the valve element stroke can be varied in two steps.

The fuel injector 1 includes a nozzle 2 and a valve element 10 accommodated inside the nozzle 2. The valve element 10 is slidable in a direction of an arrow A and in a direction of an arrow B opposite to the arrow A direction. When the valve element 10 moves in the arrow A direction, a gap is formed between the valve element 10 and a leading end of the nozzle 2, so that fuel is injected. If, on the other hand, the valve element 10 moves in the arrow B direction to be in contact with the nozzle 2, fuel injection is stopped. As described above, the fuel injector 1 is an outswinging fuel injector, in which the valve element protrudes from the leading end of the nozzle to thereby let fuel flow through the gap between the seat and the valve element.

A body BD is fixed to an upper portion of the nozzle 2 of the fuel injector 1. Note that the nozzle 2 and the body BD may be integrally formed. The body BD has two coils CL1, CL2 fixed therein. Two plungers PL1, PL2 are held on inner peripheries of the coils CL1, CL2 slidably in the arrow A and arrow B directions. When the coil CL1 is energized, the plunger PL1 is drawn in, sliding in the arrow A direction. When the coil CL2 is energized, the plunger PL2 is drawn in, sliding in the arrow A direction.

When the coil CL2 is energized, the plunger PL2 slides in the arrow A direction to push the plunger PL1 in the arrow A direction, and further to push the valve element 10 in the arrow A direction, which opens the valve. Also, when the coil CL1 is energized, the plunger PL1 slides in the arrow A direction to thereby push the valve element 10 in the arrow A direction, which opens the valve.

Note that a sliding movement (stroke) of the plunger PL1 is greater than that of the plunger PL2. The valve element 10 therefore has a greater stroke when the coil CL1 is energized than when the coil CL2 is energized, so that the stroke of the valve element 10 can be changed according to whether the coil CL1 is energized or the coil CL2 is energized.

A spring SP1 is disposed between the nozzle 2 and a top portion of the valve element 10. The spring SP1 urges the valve element 10 in the arrow B direction relative to the nozzle 2. When the coil CL1 or coil CL2 is not energized, therefore, the valve element 10 is urged in the arrow B direction to close the valve. Additionally, a spring SP2 disposed at an upper portion of the body BD gives the plungers PL1, PL2 an urging force acting in the arrow A direction to thereby prevent the plungers PL1, PL2 from oscillating freely. Note, however, that the spring SP2 has a smaller urging force than the spring SP1. This allows the valve to maintain a closed condition when the coil CL1 or coil CL2 is not energized.

Fuel stored in a fuel tank FT is supplied to the fuel injector 1 by a fuel pump P.

A fuel injector drive control unit DCU controls energization of the coils CL1, CL2. A fuel pump control unit PCU controls the fuel pump P to thereby vary fuel pressure supplied for driving the fuel injector. Note that no fuel pressure control is performed in this embodiment and thus the fuel pump control unit PCU is not essential. In other embodiments to be described later, however, the fuel pressure control is performed and the fuel pump control unit PCU is necessary.

An engine control unit ECU reads signals that indicate intention of a driver and engine conditions, such as an accelerator opening degree θ ACC, an intake air amount Qa, and an engine speed Ne. The engine control unit ECU controls an electronic control throttle system according to the accelerator opening degree θ ACC, thereby controlling an opening degree of a throttle valve to vary the intake air amount Qa. In addition, the engine control unit ECU varies the amount of fuel injected by the fuel injector 1 according to the accelerator opening degree θ ACC to thereby control the engine speed Ne. When, at this time, the engine control unit ECU outputs a control signal for the fuel injection amount to the fuel injector drive control unit DCU, the fuel injector drive control unit DCU energizes the coil CL2 to make small the stroke of the valve element 10, if, for example, the fuel injection amount is small, and also controls a valve opening time. Similarly, if, for example, the fuel injection amount is large, the fuel injector drive control unit DCU energizes the coil CL1 to make large the stroke of the valve element 10 and also controls the valve opening time.

In addition, the engine control unit ECU outputs, as necessary, a fuel pressure control signal to the fuel pump control unit PCU. The fuel pump control unit PCU then controls the fuel pump P to vary the fuel pressure supplied for driving the fuel injector.

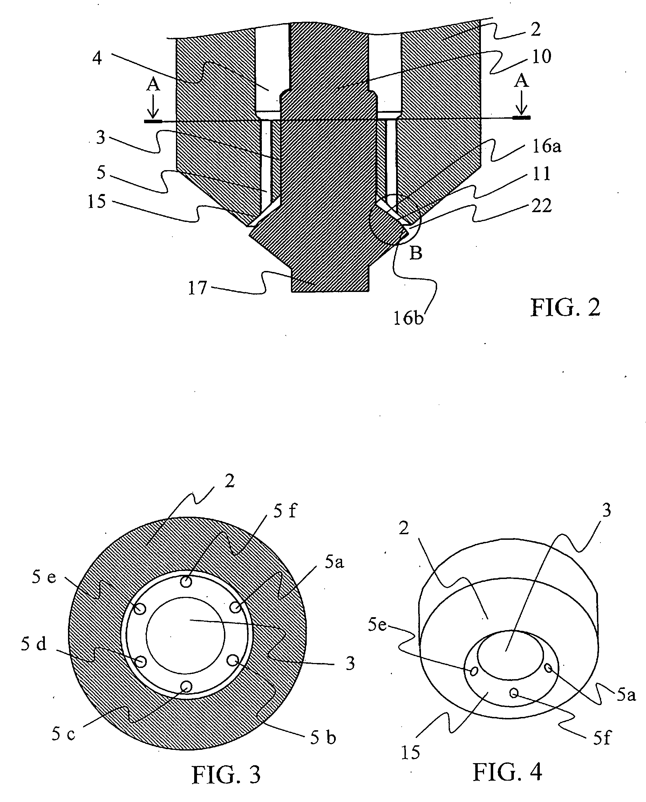

An arrangement of a nozzle leading end portion of the fuel injector according to this embodiment will be described below with reference to Figs. 2 to 4.

Fig. 2 is an enlarged cross-sectional view showing the arrangement of the nozzle leading end portion of the fuel injector according to the first embodiment of the present invention. Fig. 3 is a cross-sectional view taken along line A-A of Fig. 2. Fig. 4 is a downward perspective view showing the nozzle leading end portion of the fuel injector according to the first embodiment of the present invention. Like reference numerals refer to like parts in Figs. 2 to 4. In Figs. 2 to 4, like parts are identified by the same reference numerals as those used in Fig. 1.

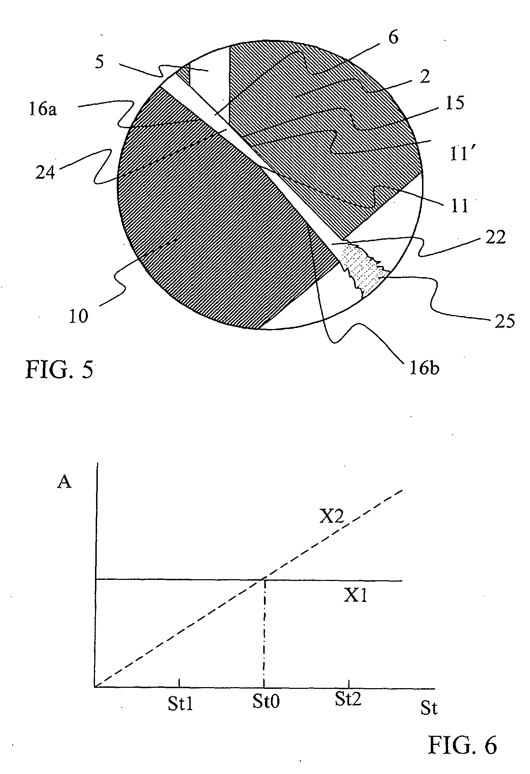

Referring to Fig. 2, the nozzle 2 as the leading end portion of the fuel injector has a guide hole 3. The valve element 10 is inserted in the guide hole 3. The valve element 10 has two conical surfaces disposed coaxially. A cone changeover portion forms a seat portion 11. A detailed arrangement of the seat portion 11 and areas surrounding the seat portion 11 will be described in detail later with reference to Fig. 5.

In a valve closed position, the valve element 10 abuts on the nozzle 2 at the seat portion 11, sealing the fuel. The valve element 10 is displaceable vertically (in the arrow A and arrow B directions in Fig. 1). When the valve element 10 leaves the seat portion 11, fuel flows from a fuel sump chamber 4 through a plurality of fuel paths 5 and past a gap between a valve seat surface 15 of the nozzle 2 and a valve element surface 16 of the valve element 10 before being injected from an annular gap portion 22.

The valve element 10 includes a protruding chuck portion 17 disposed at a leading end thereof. The chuck portion 17 assumes a portion, onto which a machine tool can hold in order to reliably fix the valve element 10 in position when machining the valve element surface 16 to close tolerances.

The plurality of fuel paths 5 shown in Fig. 2 include fuel paths 5a, 5b, ..., 5f disposed circumferentially as shown in Fig. 3. In this example, there are, for example, six holes. Additionally, the fuel paths 5 form outlet portions on the same surface as the valve seat surface 15 as shown in Fig. 4.

Flow of fuel at the leading end of the nozzle in the fuel injector according to this embodiment and mechanism of the fuel spray generated thereby will be described below with reference to Figs. 5 through 8.

Fig. 5 is an enlarged cross-sectional view showing the nozzle leading end of the fuel injector according to the first embodiment of the present invention. Fig. 5 is an enlarged cross-sectional view of part B shown in Fig. 2. Fig. 6 is an explanatory view illustrating a relation between the valve element stroke and the cross-sectional area of the fuel flow path in the fuel injector according to the first embodiment of the present invention. Figs. 7 and 8 are explanatory views illustrating the fuel spray shape in the fuel injector according to the first embodiment of the present invention. In Figs. 5, 7, and 8, like parts are identified by the same reference numerals as those used in Figs. 1 to 4.

Fig. 5 shows an arrangement and fuel flow at the leading end portion of the nozzle 2 in this embodiment.

Referring to Fig. 5, fuel that has flowed past the fuel path 5 disposed upstream of the valve element flows through an outlet portion 6 of the fuel path 5 to reach a gap-like path 24.

The valve element 10 has two conical surfaces 16a, 16b disposed coaxially. The changeover portion of the conical surfaces 16a, 16b forms the seat portion 11. The conical surface 16b is inclined more sharply than the valve seat surface 15 of the nozzle 2, while the conical surface 16a is inclined more mildly than the valve seat surface 15. A path defined by the valve seat surface 15 and the conical surface 16a has a decreasing cross-sectional area from the plurality of outlet portions 6 toward the seat portion 11 and an increasing cross-sectional area from the seat portion 11 toward the annular gap portion 22. Consequently, the path has the smallest cross-sectional area at the seat portion 11. Fuel that has flowed past the seat portion 11 is injected as a spray 25 from the annular gap portion 22.

In another arrangement that is an example which is useful for understanding the invention the conical surface 16a and the valve seat surface 15 are extended in parallel with each other so that the path has a constant cross-sectional area from the plurality of outlet portions 6 toward a seat portion area 11' and has an increasing cross-sectional area from the seat portion 11 toward the annular gap portion 22. Still in another arrangement that is an example which is useful for understanding the invention the conical surface 16b and the valve seat surface 15 are extended in parallel with each other so that the path has a decreasing cross-sectional area from the plurality of outlet portions 6 toward the seat portion area 11' and has a constant cross-sectional area from the seat portion 11 toward the annular gap portion 22. In either arrangement, the seat portion 11 having the smallest path cross-sectional area is to be disposed between the outlet portion 6 and the annular gap portion 22.

A relation between the valve element stroke and the cross-sectional area of the fuel flow path in the fuel injector according to the embodiment will be described below with reference to Fig. 6.

In Fig. 6, the abscissa represents a stroke st of the valve element 10 and the ordinate represents a cross-sectional area A of the fuel flow path.

Referring to Fig. 6, a solid line X1 represents a cross-sectional area of the fuel path 5. If the fuel paths 5 include six fuel paths 5a, 5b, ..., 5f disposed circumferentially as shown in Fig. 3, the solid line X1 shown in Fig. 6 represents a sum of cross-sectional areas of these six fuel paths. The cross-sectional area of the fuel paths 5 remains constant even with varying strokes st of the valve element 10.

Meanwhile, a broken line X2 in Fig. 6 represents a cross-sectional area of the fuel path at the seat portion 11. The seat portion 11 is formed annularly between the valve element 10 and the valve seat surface 15 as shown in Fig. 2. The broken line X2 represents the cross-sectional area of the fuel path at the ring-shaped seat portion 11. The cross-sectional area of the fuel path at the seat portion 11 varies with changing width of the seat portion 11. The width of the seat portion 11 changes as the stroke of the valve element 10 varies. Specifically, as shown by the broken line X2, the valve is in the closed position when the stroke st is 0 and the cross-sectional area of the fuel path increases with the increasing stroke st.

In Fig. 6, with the stroke st at st0, the cross-sectional area of the fuel path 5 indicated by the solid line X1 is equal to the cross-sectional area of the fuel path at the seat portion 11 indicated by the broken line X2. When the stroke st is smaller than the stroke st0, effect of pressure loss at the seat portion 11 is predominant. When the stroke st is greater than the stroke st0, effect of pressure loss in the fuel path 5 is predominant.

In the arrangement shown in Fig. 1, let, for example, st1 be a stroke amount when the stroke is small with the coil CL2 being energized and st2 be a stroke amount when the stroke is large with the coil CL1 being energized. The stroke st1 may, for example, be 3 µm and the stroke st2 may, for example, be 60 µm, each representing a practical valve element stroke.

Fig. 7 shows the flow of fuel and the cross section of the spray shape when the stroke of the valve element 10 is small relative to the positions of the fuel paths 5a to 5f shown in Fig. 3.

Referring to Fig. 7, when the stroke amount of the valve element 10 remains small (involving a small lift amount from the seat portion 11), the effect of the pressure loss at the seat portion 11 is predominant. As a result, a fuel speed at the seat portion 11 is the highest. Effect of flow from the plurality of fuel paths 5a to 5f can therefore be minimized, so that a flow 24a immediately before injection is formed near the seat portion 11 into a uniform flow before a hollow and conical spray 25a is injected.

Fig. 8 shows the flow of fuel and the cross section of the spray shape when the stroke of the valve element 10 is large relative to the positions of the fuel paths 5a to 5f shown in Fig. 3.

Referring to Fig. 8, when the stroke of the valve element 10 is large, effect of throttling at the seat portion 11 becomes small. The fuel flow is relatively affected more by throttling of the plurality of fuel paths 5a to 5f. As a result, a flow velocity at the plurality of fuel paths 5a to 5f becomes higher, affecting more.

Describing by using the fuel path 5a and the fuel path 5b as examples, fuel that has flowed through the fuel paths 5a and 5b reaches the valve element surface 16 to form a flow flowing outwardly of the fuel paths. As a result, flows at a position at which the fuel path 5a and the fuel path 5b face each other collide with each other to form a flow 24b immediately before injection. This results in a liquid film being formed in a direction perpendicular to the seat surface or the conical surface of the valve element, so that fuel is injected diametrically as a spray 25b.

Of the fuel that has flowed through the fuel paths 5a and 5b, fuel that flows out without colliding forms a liquid film that extends substantially in parallel with the conical surface of the valve element or the conical surface of the seat and is injected as a spray 25c. The arrangement, in which the path cross-sectional area between the valve element surface 16 and the valve seat surface 15 from the outlet portion 6 of the fuel path 5 to the seat portion area 11' is gradually made narrower, results in the following. Specifically, when the throttling effect of the fuel path 5 is large with a large stroke, the fuel flows past the seat portion 11, while keeping the effect of flow by the fuel path, before being injected as the spray 25c from the annular gap portion 22. This is because of the following reason. Specifically, if there is a zone like a fuel sump chamber having a large path area between the path outlet portion and the seat portion area, the fuel speed slows down in the zone, which allows the effect of the fuel path to disappear, so that a diametric spray that is substantially perpendicular to the conical surface of the valve element is no longer formed.

When the valve element 10 has a large stroke, a diametrically dispersive spray 25b is formed that diametrically dispersed corresponding to positions between each pair of the plurality of fuel paths. The spray injected diametrically has a penetrating force larger than that of the hollow and conical spray 25a shown in Fig. 7.

The foregoing arrangements allow the spray shape to be varied according to the stroke amount.

Though the embodiment has been exemplified by the configuration having six fuel injection holes, the number of fuel paths is not limited to six.

Additionally, in the embodiment, each of the fuel paths has an equal diameter, which is, however, not the only possible arrangement. The spray shape can also be changed by changing diameters of the fuel paths, thereby varying the amount of fuel flowing into the valve element surface 16 and the seat portion 11.

Additionally, in the embodiment, the fuel paths 5 are cylindrical holes. This is, however, not the only possible arrangement.

The effects of the present invention are not impaired as long as the shape and the number of the fuel paths 5, or disposition thereof, have varying degrees of effect of fuel throttling relative to the seat portion 11 with changing strokes.

The valve element surface 16 of the valve element 10 includes two conical surfaces in this embodiment. In an example which is useful for understanding the invention, however, the valve element surface 16 may be spherical. Even if the valve element 10 is eccentric relative to the nozzle 2, the spherical valve element surface allows the valve element to be aligned with the nozzle, leading to greater fuel sealing performance.

Moreover, a relative size of the sprays 25b and 25c, as in a diametric spread thereof when the stroke is large, varies with varying strokes. Only the spray 25b having a diametric spread may be available depending on the stroke.

As means of changing the stroke, an electrostrictive device or a giant magnetostrictive device, such as a piezo element, may be used, in addition to a solenoid system having a coil and a plunger as that shown in Fig. 1. An arrangement using an electrostrictive device or a magnetostrictive device incorporates only one plunger as against that shown in Fig. 1. The electrostrictive device or the magnetostrictive device is disposed between the upper portion of the plunger and the upper portion of the body. The electrostrictive device or the magnetostrictive device changes its distortion according to a control input and is therefore capable of continuously changing the stroke of the valve element. The arrangement shown in Fig. 1 changes the stroke in two steps only. By continuously changing the stroke, the spray shape can be continuously changed from the condition of Fig. 7 to that of Fig. 8.

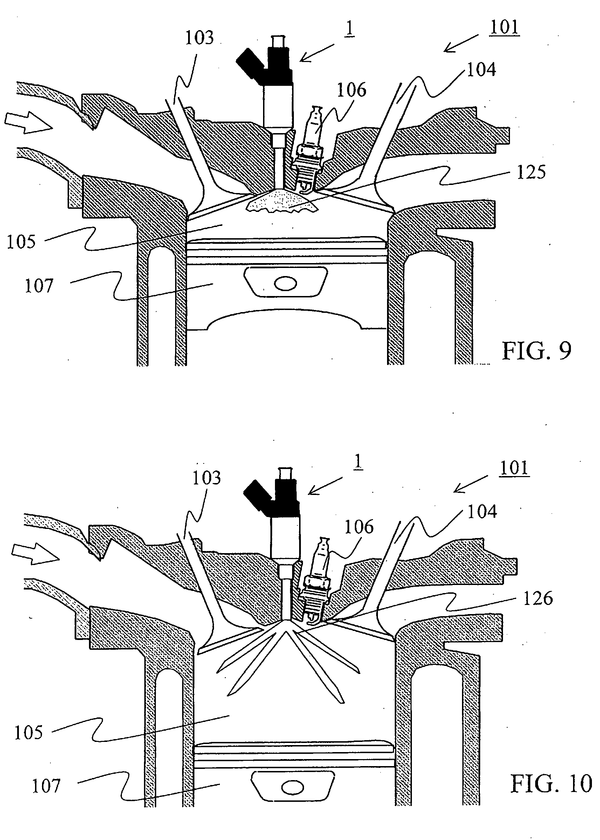

A condition of spray into a combustion chamber in the fuel injector according to the embodiment will be described below with reference to Figs. 9 to 11.

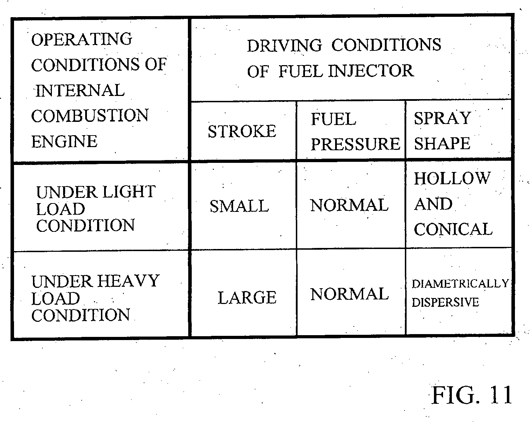

Figs. 9 and 10 are cross-sectional views showing an internal combustion engine mounted with the fuel injector according to the first embodiment of the present invention. Fig. 11 is an explanatory chart illustrating operating conditions of the internal combustion engine and driving conditions of the fuel injector in the fuel injector according to the first embodiment of the present invention.

In the arrangement shown in Fig. 9, an internal combustion engine 101 includes an intake valve 103 that serves as an open/close valve of intake air and an exhaust valve 104 that serves as an open/close valve for discharging a burned exhaust gas. The fuel injector 1 is an center injection type disposed substantially vertically at a position upward of a center of a combustion chamber 105 of the internal combustion engine 101.

A spray 125 from the fuel injector 1 is directly injected into the combustion chamber 105 to form a mixture. In addition, the internal combustion engine 101 includes a cylinder 107 that compresses the mixture in the combustion chamber 105 and an ignition plug 106 that ignites a compressed mixture. The ignition plug 106 is disposed near the fuel injector 1, with inclining a downstream side thereof toward the fuel injector side. The fuel injector 1 is supplied with fuel pressurized by a fuel pump not shown.

Fig. 9 shows a condition, in which the fuel injector 1 according to the embodiment mounted in the internal combustion engine 101 injects a spray with a small amount of stroke of the fuel injector. The spray 125 is the hollow and conical spray 25a described with reference to Fig. 7.

Fig. 10 shows a condition, in which the fuel injector 1 injects a spray with a large amount of stroke. A spray 126 is the diametrically dispersive spray 25b described with reference to Fig. 8.

Fig. 11 shows a relation between operating conditions of the internal combustion engine and driving conditions of the fuel injector. When the internal combustion engine is operating under light load conditions, the fuel injector 1 is made to have a small stroke. The small stroke results in the hollow and conical spray being injected and a smaller amount of fuel injected, which facilitates control of a very small amount of fuel injected. Injection of the hollow and conical spray forms a stabilized recirculation zone around the spray, so that fuel around the ignition plug 106 can be stably stagnated even during injection on the compression stroke.

Under heavy load conditions, the fuel injector 1 is made to have a large stroke, which injects the diametrically dispersive spray, so that fuel in the combustion chamber 105 can be made more dispersive.

Fuel pressure is normal (for example, 10 MPa) regardless of whether the internal combustion engine is operating under light or heavy load conditions.

Preferably, the fuel is injected a plurality of times. This reduces the amount of injection per sequence to reduce a penetrating force of the spray, so that the spray 125 formed tends to stagnate at the ignition plug 106 for even more improved combustion stability.

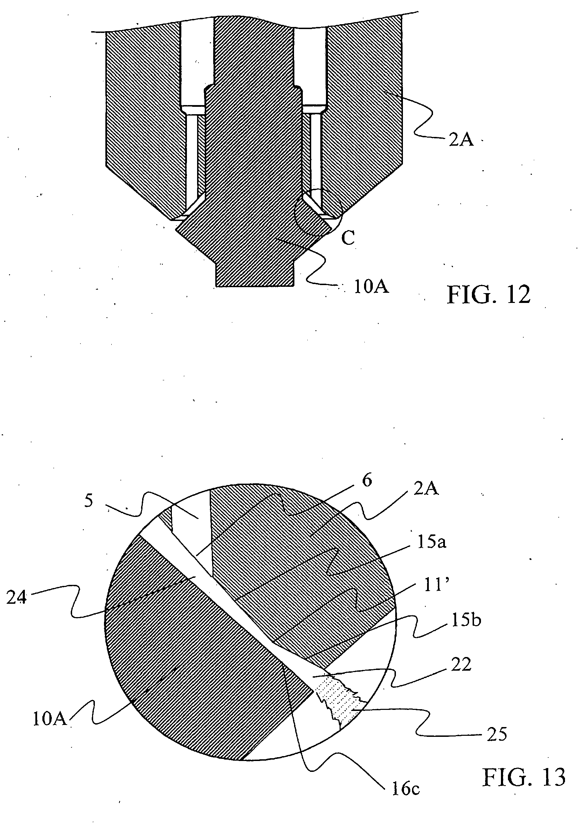

Another arrangement of a fuel injector which is usefull to understand the invention will be described below with reference to Figs. 12 and 13.

Fig. 12 is an enlarged cross-sectional view showing an arrangement of a nozzle leading end portion in another arrangement of the fuel injector. Fig. 13 is an enlarged view showing part C of Fig. 12. In these Figures, like parts are identified by the same reference numerals as those used in Figs. 2 and 5.

This example has an arrangement of conical surfaces different from the example of the nozzle 2 and the valve element 10 shown in Figs. 2 and 5.

In the example shown in Figs. 2 and 5, the valve element 10 has the two conical surfaces 16a, 16b and the valve seat surface 15 has a single conical surface. By contrast, this example is arranged such that a nozzle body 2A has two conical surfaces 15a, 15b and an intersection therebetween forms a seat portion 11'. A valve element surface 16c that assumes a surface of forming a seat of a valve element 10A has a single conical surface. Fuel that has flowed through a fuel path 5 flows between the valve element surface 16c and the valve seat surface 15 to reach the seat portion 11' and is injected as a spray 25 from an annular gap portion 22.

This example is arranged, as in the example of Figs. 2 and 5, such that the cross-sectional area of the path between the valve element surface 16c and the conical surface 15a from an outlet portion 6 of the fuel path 5 to the seat portion 11' is narrowed. This forms the same spray shape. When the valve element 10A has a small stroke amount, effect of pressure loss at the seat portion 11' is predominant. As a result, the fuel speed at the seat portion 11' is the highest, which minimizes effect of flow by the fuel path 5 and a hollow and conical spray is injected. If the stroke is large and an effect of throttling by the fuel path 5 is large, fuel flows past the seat portion 11', while maintaining an effect of flow by the fuel path and a spray having a diametrical spread is injected from the annular gap portion 22.

By having the arrangements as described above for this example, the conical surface 15a is angled toward the valve element surface 16c, which causes a force to act on the fuel being pressed up against the valve element surface 16c. The fuel is thereby stably injected toward the center of the fuel injector.

As described heretofore, according to this example, a spray that is suitable for both stratified combustion and homogeneous combustion can be formed and the DI engine can be operated with low fuel consumption and high power output.

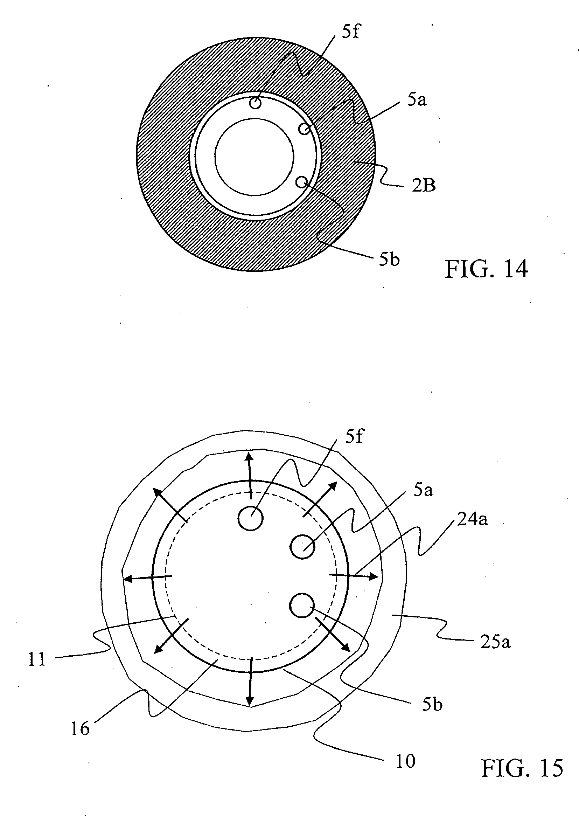

An arrangement and operation of a fuel injector according to a second embodiment of the present invention will be described below with reference to Figs. 14 through 16. The arrangement of a fuel injection device that uses the fuel injector of this embodiment is the same as that shown in Fig. 1. Similarly, the arrangement of a nozzle leading end portion of the fuel injector according to this embodiment is substantially the same as that shown in Fig. 2.

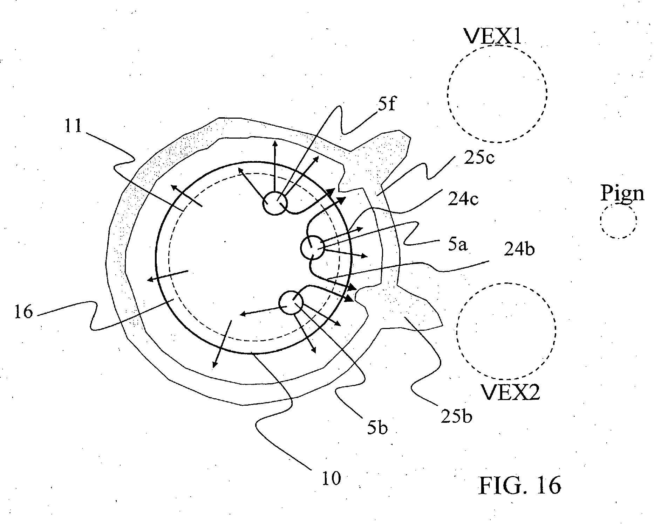

Fig. 14 is an enlarged cross-sectional view showing the arrangement of the nozzle leading end portion of the fuel injector according to the second embodiment of the present invention. Fig. 14 is a cross-sectional view taken along line A-A of Fig. 2. Figs. 15 and 16 are explanatory views illustrating a fuel spray.shape in the fuel injector according to the second embodiment of the present invention. In Figs. 14 through 16, like parts are identified by like reference numerals as those used in Figs. 1 through 8.

In the example shown in Fig. 3, the six fuel paths 5a to 5f of the fuel injector are arrayed circumferentially, equally spaced apart from each other. By contrast, in the example shown in Fig. 14, fuel paths of the fuel injector formed in a nozzle 2B include only three fuel paths 5a, 5b, and 5f arrayed eccentrically on a circumferential local part. Note that a valve element 10 has the same arrangements as those shown in Fig. 2 or 5.

Flow of fuel in this embodiment and mechanism of a variable spray generated thereby will be described below with reference to Figs. 15 and 16.

Fig. 15 shows the flow of fuel and the cross section of the spray shape when the stroke of a valve element 10 is small relative to the positions of the fuel paths 5a, 5b, and 5f shown in Fig. 14.

When the stroke amount of the valve element 10 remains small (involving a small lift amount from a seat portion 11), the effect of flow path throttling at the seat portion 11 becomes large and the flow velocity at the seat portion becomes high. Fuel that has flowed through the plurality of fuel paths 5a, 5b, and 5f is less affected by the plurality of fuel paths 5a, 5b, and 5f. The fuel then forms a circumferentially uniform flow as a flow 24a immediately before seat injection and is injected into a hollow and conical shape as a spray 25a.

Fig. 16 shows the flow of fuel and the cross section of the spray shape when the stroke of the valve element 10 is large relative to the positions of the fuel paths 5a, 5b, and 5f shown in Fig. 14.

When the stroke of the valve element 10 is large, the throttling effect at the fuel paths 5a, 5b, and 5f becomes great, while that at the seat portion 11 is small. Describing by using the fuel paths 5a, 5b as examples, fuel that has flowed through the fuel paths 5a, 5b reaches a valve element surface 16, at which the fuel forms a flow flowing outwardly of the fuel paths. As a result, flows at a position at which the fuel paths 5a and 5b face each other collide with each other to form a flow 24b immediately before injection. This results in a liquid film being formed in a direction perpendicular to the circumferential direction, so that fuel is injected as a spray 25b. Of the fuel that has flowed through the fuel paths 5a and 5b, fuel that is free from fuel paths facing each other flows as fuel 24c before injection toward the seat portion and is injected into a hollow and conical shape as a spray 25c. In this case, the three fuel paths result in two sprays 25b in the diametric direction.

At this time, a mounting direction of the fuel injector is established so that the two diametric sprays 25b are oriented toward positions downward of two exhaust valves VEX1 and VEX2 of the internal combustion engine. An ignition plug PIGN is indicated for another example and will be described later.

Generally speaking, a high temperature zone tends to be generated at a position downward of an exhaust valve in the combustion chamber, where knocking tends to occur. By injecting fuel with the two sprays 25b having a high penetrating force for such a knocking zone, temperature of the knocking zone can be reduced. Because knocking can thereby be prevented from occurring, it is therefore possible to configure an internal combustion engine that is less likely to knock even with a high compression ratio. A higher compression ratio can lead to improved fuel consumption.

The foregoing description has been directed toward the center injection type, in which the fuel injector is disposed immediately above the combustion chamber. The spray shape shown in Fig. 16 may still be applied to a DI engine of a side injection type, in which the fuel injector is disposed sideways of the combustion chamber. In this case, the mounting direction of the fuel injector is established so that the two fuel sprays 25b are oriented toward both sides and downwardly relative to the position of the ignition plug PIGN indicated by a dashed-dotted line. The ignition plug is disposed farther from the fuel injector in the side injection type than in the center injection type. In such a case, use of the spray 25b having a high penetrating force allows the fuel spray to be formed near the ignition plug. Note that orienting the spray 25b toward the ignition plug causes the ignition plug to be wet with the fuel spray, resulting in ignition failure. To prevent this, the two sprays 25b are oriented toward both sides of the ignition plug.

The spray shape can be varied according to the stroke amount through the foregoing arrangements.

By disposing the plurality of fuel paths 5 unevenly as in this embodiment, the flow upstream of the seat portion 11 can be varied to obtain a desired spray shape.

Though the example, in which three fuel injection holes are disposed, has been described, the number of fuel paths is not limited to three. In addition, though each of the fuel paths has the same diameter, which is not the only possible arrangement. Rather, by changing the diameters of the fuel paths, the amount of fuel flowing onto the valve element surface 16 and the seat portion 11 is varied, which allows the spray shape to be changed. Additionally, in this example, the fuel paths 5 are cylindrical holes. This is, however, not the only possible arrangement. The effects of the present invention are not impaired as long as the shape and the number of the fuel paths 5, or disposition thereof, have varying degrees of effect of fuel throttling relative to the seat portion 11 with changing strokes.

As described heretofore, according to the embodiment, a spray that is suitable for both stratified combustion and homogeneous combustion can be formed and the DI engine can be operated with low fuel consumption and high power output.

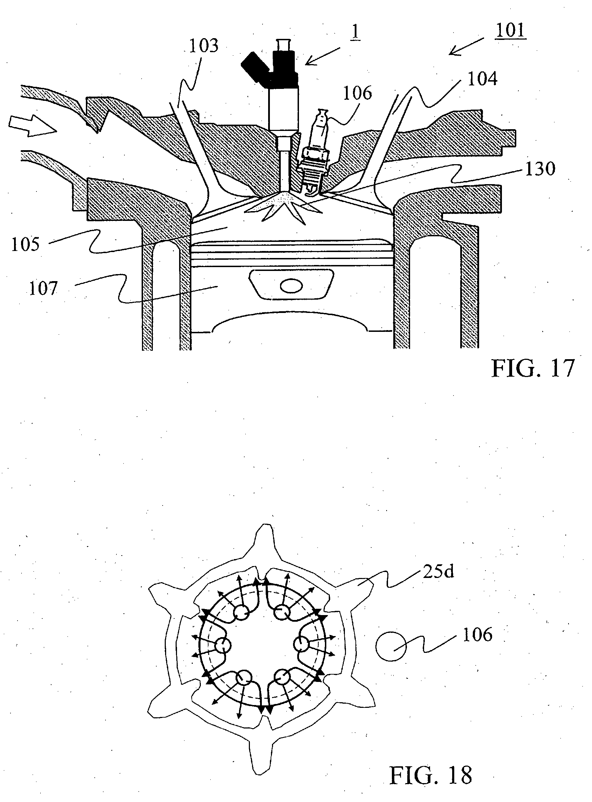

An arrangement and operation of a fuel injector according to a third embodiment of the present invention will be described below with reference to Figs. 17 through 20. The arrangement of a fuel injection device that uses the fuel injector of this embodiment is the same as that shown in Fig. 1. Similarly, the arrangement of a nozzle leading end portion of the fuel injector according to this embodiment is substantially the same as that shown in Fig. 2.

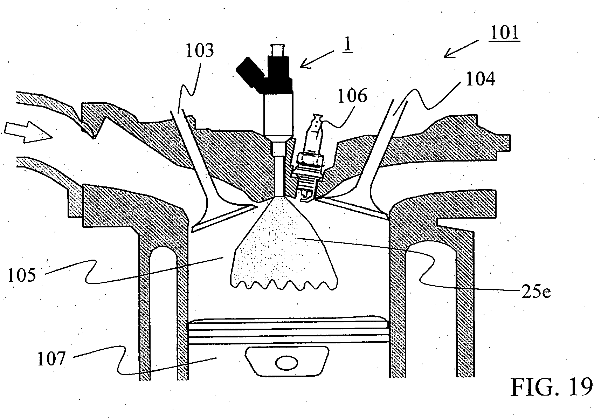

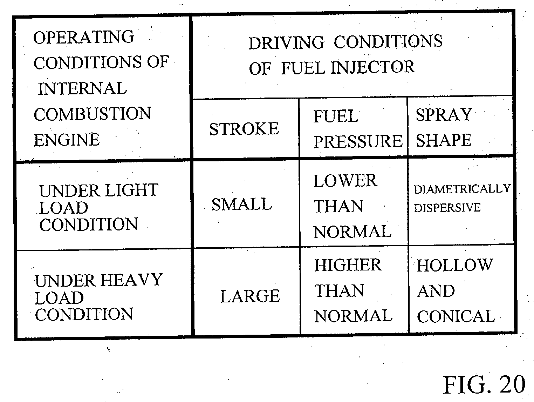

Fig. 17 is a cross-sectional view showing an internal combustion engine mounted with a fuel injector according to a third embodiment of the present invention. Fig. 18 is an explanatory view illustrating a fuel spray shape in the fuel injector according to the third embodiment of the present invention. Fig. 19 is a cross-sectional view showing the internal combustion engine mounted with the fuel injector according to the third embodiment of the present invention. Fig. 20 is an explanatory chart illustrating operating conditions of the internal combustion engine and driving conditions of the fuel injector in the fuel injector according to the third embodiment of the present invention. In Figs. 17 through 20, like parts are identified by like reference numerals as those used in Figs. 1 through 16.

Fig. 17 shows a condition, in which a fuel injector 1 according to this embodiment mounted in an internal combustion engine 101 forms a spray with a small stroke amount of the fuel injector. Arrangements are the same as those shown in Fig. 9.

Fig. 18 shows a shape of a fuel spray 25d in the example shown in Fig. 17. Though of a diametrically dispersive type, the fuel spray 25d has a smaller penetrating force than one that is shown in Fig. 8 does. The diametric spray is not directed toward an ignition plug 106, but toward both sides thereof.

Fig. 19 shows a condition, in which a spray when the fuel injector 1 has a large stroke amount is formed. A spray 25e, of a hollow and conical type, has a larger penetrating force than one that is shown in Fig. 7 does.

A relation between operating conditions of the internal combustion engine and driving conditions of the fuel injector will be described below with reference to Fig. 20.

Under light load operating conditions, the fuel injector 1 is made to have a large stroke and the diametrically dispersive spray 25d is thereby formed. In addition, the fuel injector 1 is mounted such that the sprays 25d sandwich the ignition plug 106 as shown in Fig. 18. Required fuel injection amounts are controlled by keeping low pressure supplied from a fuel pump. For example, the fuel pressure is set to 3 to 8 MPa under light load conditions.

Under heavy load operating conditions, preferably, the fuel injector 1 is made to have a small stroke, while the fuel pressure is increased to achieve a required fuel injection amount. By injecting the hollow and conical spray 25e under high pressure, a diametric spray spread can be held low, so that fuel can be inhibited from being deposited on a wall surface of the combustion chamber. For example, the fuel pressure is set to 12 to 20 MPa under heavy load conditions.

Through the foregoing arrangements, the spray 25d can be made to stably stagnate near the ignition plug 106 under light load conditions, so that combustion can be stabilized even in stratified combustion. Under heavy load conditions, on the other hand, the spray 25e that is more atomized than normal is formed because of the supply of an even further pressurized fuel. The spray in a combustion chamber 105 is therefore more dispersive, thus promoting even higher power output.

Preferably, the fuel is injected a plurality of times. This reduces the amount of injection per sequence to reduce a penetrating force of the spray, so that the spray 24d formed tends to stagnate at the ignition plug 106 for even more improved combustion stability.

As described heretofore, according to the embodiment, a spray that is suitable for both stratified combustion and homogeneous combustion can be formed and the DI engine can be operated with low fuel consumption and high power output.

### Description of Reference Numerals

- 1:: fuel injector
- 2:: nozzle
- 4:: fuel sump chamber
- 5:: fuel path
- 10:: valve element
- 11:: seat portion
- 15:: valve seat surface
- 16:: valve element surface
- 17:: chuck portion
- 22:: annular gap portion
- 101:: internal combustion engine
- 103:: intake valve
- 104:: exhaust valve
- 105:: combustion chamber
- 106:: ignition plug
- 107:: piston

## Claims

1. An outswinging fuel injector, comprising:
a nozzle (2) having a plurality of fuel paths (5) thereinside; and
a valve element (10) vertically movable inside the nozzle (2), and having a conical valve element surface (16) facing a conical valve seat surface (15) of the nozzle (2), the valve element surface (16) abutting against the valve seat surface (15) to form a seat portion (11) that seals fuel, the fuel paths (5) each having an opening portion upstream of the seat portion (11), and the valve element (10) moving to form an annular gap (22) between the seat portion (11) and the valve element surface (16) of the valve element (10) to thereby inject fuel from the annular gap portion (22),
wherein; a distance between the seat portion (11) and the valve element (10) when the valve element (10) leaves the valve seat surface (15) is variable;
the valve element (10) has a first conical surface (16b) and a second conical surface (16a);
an angle of the first conical surface (16b) relative to a longitudinal axis of the injector is smaller than an angle of the valve seat surface (15) relative to the longitudinal axis of the injector;
an angle of the second conical surface (16a) relative to the longitudinal axis of the injector is larger than an angle of the valve seat surface (15) relative to the longitudinal axis of the injector;
the fuel paths (5) form outlet portions (6) on the same surface as the valve seat surface (15) and face the second conical surface (16a); and
a cross-sectional area of the annular gap (22) between the seat portion (11) and the valve element surface (16) of the element (10) is variable from a value smaller than a cross-sectional area of the fuel path (5) to a value larger than the cross-sectional area of the fuel path (5) depending on a stroke amount of the valve element (10).

2. The fuel injector according to claim 1, wherein the plurality of fuel paths (5) from outlet portions thereof toward the seat portion (11) each include a zone that has a decreasing cross-sectional area toward a downstream side.

3. The fuel injector according to claim 1, wherein the fuel paths (5) are arrayed circumferentially around the valve element (10), and equally spaced apart from each other.

4. The fuel injector, according to claim 1, wherein the fuel paths (5) are arrayed eccentrically on a circumferential local part around the valve element (10).

5. A fuel injection device, comprising:
a fuel injector (1) that directly injects fuel into a combustion chamber (105) of an internal combustion engine; and
control means that controls the amount of fuel injected by the fuel injector (1), wherein
the fuel injector (1) is an outswinging fuel type fuel injector according to claim 1.

6. The fuel injector according to claim 1 or 5, wherein the fuel paths (5) are arrayed eccentrically on a circumferential local part around the valve element (10).

## Patentansprüche

1. Nach außen ausfahrende Kraftstoffeinspritzeinrichtung, die Folgendes umfasst:
eine Düse (2), die darin mehrere Kraftstoffwege (5) besitzt; und
ein Ventilelement (10), das in der Düse (2) vertikal beweglich ist und eine konische Ventilelementoberfläche (16), die einer konischen Ventilsitzoberfläche (15) der Düse (2) zugewandt ist, besitzt, wobei die Ventilelementoberfläche (16) an der Ventilsitzfläche (15) anliegt, um einen Sitzabschnitt (11) zu bilden, der eine Abdichtung für Kraftstoff bildet, wobei die Kraftstoffwege (5) jeweils einen Öffnungsabschnitt stromaufseitig des Sitzabschnitts (11) besitzen und wobei sich das Ventilelement (10) bewegt, um einen ringförmige Spalt (22) zwischen dem Sitzabschnitt (11) und der Ventilelementoberfläche (16) des Ventilelements (10) zu bilden, um dadurch Kraftstoff von dem ringförmigen Spaltabschnitt (22) einzuspritzen,
wobei ein Abstand zwischen dem Sitzabschnitt (11) und dem Ventilelement (10) dann, wenn das Ventilelement (10) die Ventilsitzoberfläche (15) verlässt, veränderlich ist;
das Ventilelement (10) eine erste konische Oberfläche (16b) und eine zweite konische Oberfläche (16a) besitzt;
ein Winkel der ersten konischen Oberfläche (16b) in Bezug auf eine Längsachse der Einspritzeinrichtung kleiner als ein Winkel der Ventilsitzoberfläche (15) in Bezug auf die Längsachse der Einspritzeinrichtung ist;
ein Winkel der zweiten konischen Oberfläche (16a) in Bezug auf die Längsachse der Einspritzeinrichtung größer als ein Winkel der Ventilsitzoberfläche (15) in Bezug auf die Längsachse der Einspritzeinrichtung ist;
die Kraftstoffwege (5) Auslassabschnitte (6) in derselben Oberfläche wie die Ventilsitzoberfläche (15) bilden und der zweiten konischen Oberfläche (16a) zugewandt sind; und
eine Querschnittsfläche des ringförmigen Spalts (22) zwischen dem Sitzabschnitt (11) und der Ventilelementoberfläche (16) des Ventilelements (10) in Abhängigkeit von einem Hubbetrag des Ventilelements (10) von einem Wert, der kleiner als eine Querschnittsfläche des Kraftstoffwegs (5) ist, zu einem Wert, der größer als die Querschnittsfläche des Kraftstoffwegs (5) ist, veränderlich ist.

2. Kraftstoffeinspritzeinrichtung nach Anspruch 1, wobei die mehreren Kraftstoffwege (5) von Auslassabschnitten hiervon zu dem Sitzabschnitt (11) jeweils eine Zone aufweisen, die eine zur stromabwärtigen Seite abnehmende Querschnittsfläche hat.

3. Kraftstoffeinspritzeinrichtung nach Anspruch 1, wobei die Kraftstoffwege (5) in Umfangsrichtung um das Ventilelement (10) angeordnet und voneinander gleichmäßig beabstandet sind.

4. Kraftstoffeinspritzeinrichtung nach Anspruch 1, wobei die Kraftstoffwege (5) in einem räumlich begrenzten Umfangsabschnitt um das Ventilelement (10) exzentrisch angeordnet sind.

5. Kraftstoffeinspritzeinrichtung, die Folgendes umfasst:
eine Kraftstoffeinspritzeinrichtung (1), die Kraftstoff direkt in eine Verbrennungskammer (105) einer Brennkraftmaschine einspritzt; und
Steuermittel, die die Kraftstoffmenge, die von der Kraftstoffeinspritzeinrichtung (1) eingespritzt wird, steuert, wobei
die Kraftstoffeinspritzeinrichtung (1) eine Kraftstoffeinspritzeinrichtung des nach außen ausfahrenden Typs nach Anspruch 1 ist.

6. Kraftstoffeinspritzeinrichtung nach Anspruch 1 oder 5, wobei die Kraftstoffwege (5) in einem räumlich begrenzten Umfangsabschnitt um das Ventilelement (10) exzentrisch angeordnet sind.

## Revendications

1. Injecteur de carburant dirigé vers l'extérieur, comprenant :
une buse (2) ayant à l'intérieur d'elle-même une pluralité de trajets de carburant (5) ; et
un élément de valve (10) verticalement déplaçable à l'intérieur de la buse (2) et ayant une surface conique d'élément de valve (16) en face d'une surface conique de siège de valve (15) de la buse (2),
la surface d'élément de valve (16) venant buter contre la surface de siège de valve (15) pour former une portion de siège (11) qui bloque le carburant de façon étanche, les trajets de carburant (5) ayant chacun une portion d'ouverture en amont de la portion de siège (11), et
l'élément de valve (10) se déplaçant pour former un intervalle annulaire (22) entre la portion de siège (11) et la surface d'élément de valve (16) de l'élément de valve (10) pour injecter ainsi du carburant depuis la portion d'intervalle annulaire (22),
dans lequel une distance entre la portion de siège (11) et l'élément de valve (10) quand l'élément de valve (10) quitte la surface de siège de valve (15) est variable ;
l'élément de valve (10) a une première surface conique (16b) et une seconde surface conique (16a) ;
un angle de la première surface conique (16b) par rapport à un axe longitudinal de l'injecteur est plus petit qu'un angle de la surface de siège de valve (15) par rapport à l'axe longitudinal de l'injecteur ;
un angle de la seconde surface conique (16a) par rapport à l'axe longitudinal de l'injecteur est plus grand qu'un angle de la surface de siège de valve (15) par rapport à l'axe longitudinal de l'injecteur ;
les trajets de carburant (5) forment des portions de sortie (6) sur la même surface que la surface de siège de valve (15) et sont en face de la seconde surface conique (16a) ; et
une aire de section transversale de l'intervalle annulaire (22) entre la portion de siège (11) et la surface d'élément de valve (16) de l'élément de valve (10) est variable depuis une valeur plus petite qu'une aire de section transversale du trajet de carburant (5) jusqu'à une valeur plus grande que l'aire de section transversale du trajet de carburant (5), en dépendance d'une amplitude de course de l'élément de valve (10).

2. Injecteur de carburant selon la revendication 1, dans lequel la pluralité de trajets de carburant (5) incluent chacun, depuis leurs portions extérieures vers la portion de siège (11), une zone qui a une aire de section transversale en diminution vers un côté aval.

3. Injecteur de carburant selon la revendication 1, dans lequel les trajets de carburant (5) sont disposés en rayons circonférentiellement autour de l'élément de valve (10) et sont également espacés les uns des autres.

4. Injecteur de carburant selon la revendication 1, dans lequel les trajets de carburant (5) sont disposés en rayons de manière excentrique sur une partie locale circonférentielle autour de l'élément de valve (10).

5. Dispositif d'injection de carburant, comprenant :
un injecteur de carburant (1) qui injecte directement du carburant dans une chambre de combustion (105) d'un moteur à combustion interne ; et
des moyens de commande qui commandent la quantité de carburant injecté par l'injecteur de carburant (1), dans lequel
l'injecteur de carburant (1) est un injecteur de carburant du type dirigé vers l'extérieur selon la revendication 1.

6. Injecteur de carburant selon la revendication 1 ou 5,
dans lequel les trajets de carburant (5) sont disposés en rayons de manière excentrique sur une partie locale circonférentielle autour de l'élément de valve (10).
